Europäisches Patentamt

European Patent Office

Office européen des brevets

(11) Publication number: **0 301 671 B1**

## EUROPEAN PATENT SPECIFICATION

(45) Date of publication of patent specification: **01.04.92**

(51) Int. Cl.5: **E21B 47/022**, E21B 7/04, G01V 3/26

(21) Application number: **88201635.5**

(22) Date of filing: **28.07.88**

(54) Method of magnetizing well tubulars.

(30) Priority: **30.07.87 GB 8718041**

(43) Date of publication of application:
**01.02.89 Bulletin 89/05**

(45) Publication of the grant of the patent:
**01.04.92 Bulletin 92/14**

(84) Designated Contracting States:
**DE ES FR GB IT NL**

(56) References cited:
**US-A- 3 406 766**
**US-A- 4 072 200**
**US-A- 4 458 767**
**US-A- 4 465 140**

**Offshore, Vol. 48 (1988), April, No. 4, Tulsa, Oklahoma, USA, p. 23 LeBlanc: Casing magnetization aids home-in for relief well**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **de Lange, Jan Izaâk**
**Volmerlaan 6**
**NL-2280 AB Rijswijk(NL)**

Rank Xerox (UK) Business Services

## Description

The invention relates to a method of magnetizing a string of well tubulars along at least part of the length thereof.

During drilling of deep wells for oil and gas production precise control of the path followed by the well is difficult so that it is difficult to know the exact location of the well at a given depth. This is of particular concern if in case of a well blow-out a relief well must be drilled to intersect the blowing well at a subsurface location.

It is known in the art to magnetize well tubulars, such as a well casing, so as to create a magnetic target that can be detected by magnetic sensors in a relief well in case of a well blow-out. U.S. patent Nos. 4,458,767 and 4,465,140 disclose a method of magnetizing a well casing by traversing an internal magnetizer along and within the casing while periodically reversing the direction of magnetic field to create a plurality of flux leakage points along the casing. A disadvantage of the known method is that the internal magnetic source creates a magnetic field of which the toroidal magnetic flux lines are scattered when they pass through the wall of the casing, thereby reducing the effectiveness of the magnetisation. In accordance with the known method it appeared possible to magnetize the casing to a magnetic pole strength up to $10^5 \gamma \text{ft}^2$ ($\approx 10 \ \mu\text{Wb}$).

The strength of the magnetic field surrounding a magnetic pole can be estimated by the following formula:

$$B = \frac{P}{4\pi R^2}$$

in which:

B = measured magnetic field strength ($\mu$T) at a location located at a distance R (m) from the magnetic pole and

P = magnetic pole strength ($\mu$Wb).

As the sensitivity of magnetic sensors currently available for borehole surveying operations is such that they can detect magnetic field strength variations of more than about 0.05 $\mu$T it can be calculated that the detection range of the magnetic field around a casing magnetized by the known method is limited to a distance of less than about 4 m from the magnetized casing.

Although during well surveying operations sometimes much higher magnetic pole strengths, incidentally up to more than 2000 $\mu$Wb, have been measured on well tubulars it was found that this coincidentally high "spontaneous" pole strength is highly unpredictable.

Thus there still is a need for a more powerful and accurate method for magnetization of well tubulars which enables determining on the basis of the magnetic field strength in the relief well the direction and distance of a target well in which a blow-out may have occurred. This method should remove the unpredictable magnetization of the casing or other well tubulars involved. Moreover, such a method must be simple so that it can be easily used under adverse field conditions and must provide strongly magnetized well tubulars, since it is extremely important that a well in which a blow-out has occurred be quickly located and plugged not only to protect personnel but also because drilling of a relief well is an expensive and hazardous operation and any delay in obtaining the needed information on the position of the target well can be costly.

Accordingly it is an object of the present invention to provide a simple but accurate method of strongly magnetizing at least part of a string of well tubulars such that a magnetic field emanated by the magnetized tubulars can be detected at a great distance from these tubulars.

It is a further object of the present invention to provide a method of strongly magnetizing at least part of a string of well tubulars to a predetermined pole strength.

Briefly, the method of the present invention includes the steps of:

- selecting an elongate ferromagnetic section of the string which is suitable to be magnetized,
- creating a magnetic field having flux lines which pass in a substantially longitudinal direction through said section, thereby magnetizing said section such that it has opposed magnetic poles having a pole strength of more than 3000 $\mu$Wb,
- mating said magnetized section with other sections of the string, and
- lowering the string into a borehole.

Most preferably said magnetic field is created by passing a direct current through an electric coil having a central opening in which the magnetic flux lines have a substantially parallel orientation, wherein the step of magnetizing said elongate ferromagnetic section is carried out by traversing the section in longitudinal direction through the central opening of the coil.

If the string of well tubulars consists of a steel casing or drillpipe string then a selected section of the string may be magnetized by passing the section through the coil. If the string of well tubulars, however, is made of a non-magnetisable material, such as plastic, then an elongate section consisting of a strip or sleeve of ferromagnetic material may be magnetized by the method according to the invention and attached to a selected portion of the string. Said ferromagnetic section may be magnetized either before or after attaching the section to said selected portion of the string.

The invention will now be explained in more detail, by way of example with reference to the accompanying drawings, in which:

Fig. 1 is a schematic sketch of a reference well and a target well which contains a casing section magnetized in accordance with the method according to the invention.

Fig. 2 is a plot of measured and theoretical axial ($B_z$, $B_z^{'}$) and cross-axial ($B_{xy}$, $B_{xy}^{'}$) magnetic field strengths in the reference well resulting from the magnetic field emanated by the magnetized casing section in the target well.

## FIELD TEST RESULTS

Field experiments have been carried out to verify the range at which a magnetic field emanated by a casing section magnetized by the method according to the invention can be detected.

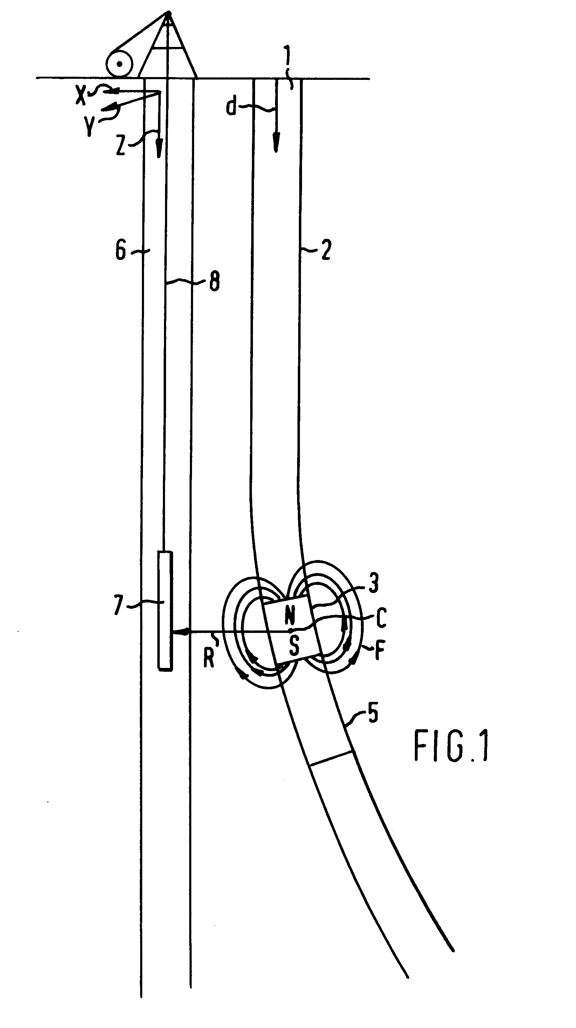

As illustrated in Fig. 1 the field test was carried out by installing in a target well 1 a casing string 2 comprising a casing section 3 which has been magnetized by traversing the section 3 in axial direction through the central opening of an electric coil. The magnetized casing section 3 was a normal N80 grade steel casing section having a length of 12.74 m and an outer diameter of 0.34 m.

During magnetization the electric coil was moved in axial direction along the casing section. The magnetization resulted in magnetic pole strength in the order of 13000 $\mu$Wb. The magnetized casing section was installed on top of a non-magnetic casing section 5 at the nearpoint between the target well 1 and a nearby reference well 6.

The separation distance R between the two wells at the centre C of the magnetized casing section 3 was about 6 m. The position of the two wells relative to each other was accurately surveyed by inertial navigation survey equipment.

The centre of the magnetized casing section 3 was located at a depth of about 500 m in the target well 1 such that at the base of the magnetized section 3 a South monopole S and at the top thereof a North monopole N is located. Accordingly toroidal magnetic field lines F develop between the poles N and S.

A magnetic surveying tool 7 consisting of solid state magnetic sensors was run on wireline 8 in an uncased hole section of the reference well 6. Close-spaced magnetic measurements were taken along the longitudinal axis z of the reference well 6.

The raw magnetic surveying data obtained by the tool 7 were corrected for tool rotation and the influence of the Earth's magnetic field.

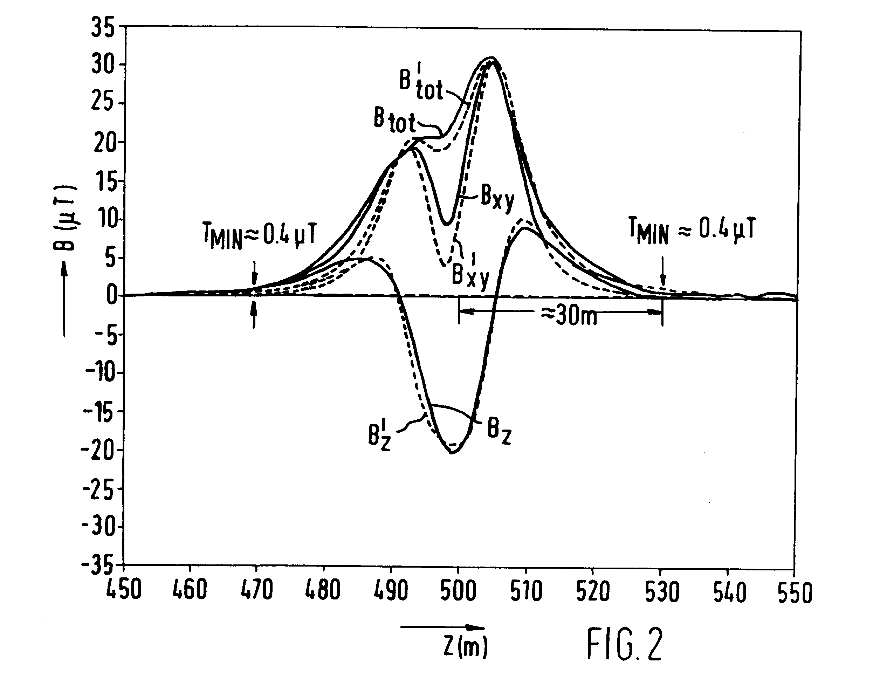

The magnitude of the remaining measured magnetic field components in axial direction ($B_z$) and cross-axial direction ($B_{xy}$) with depth z in the reference well 6 is plotted in Fig. 2 (solid lines). In Fig. 2 the magnitude of the total magnetic field $B_{tot}$, calculated on the basis of the formula $B_{tot} = \sqrt{B_{xy}^2 + B_z^2}$, is plotted as well.

On the basis of the field results a theoretical model of the magnetization on the casing was constructed. The model basically assumes a South monopole at the base of the magnetized casing section (d = 506 m) and a North monopole, of reduced strength, at the top of the joint (d = 493 m). In Fig. 2 the field B8tot predicted by the theoretical model and the axial ($B_z^{'}$) and cross-axial ($B_{xy}^{'}$) components thereof (dashed lines) are compared with the measured field $B_{tot}$ and the axial ($B_z$) and cross-axial ($B_{xy}$) components thereof. A good match may be seen, indicating the validity of this model to describe the magnetic field behaviour.

By making a least squares comparison between the model and the field data, it was found that the distance R to the target well 1 could be determined to within ±0.5 m. The direction could be determined to within 2°.

The model could be used to estimate the range at which the target well 1 could ultimately have been detected. The accuracy of the surveying tool 7 was !about 0.2 $\mu$T. Measured remaining magnetic fields exceeding this value, indicate a magnetic anomaly. If a threshold value T of 0.4 $\mu$T is applied to the data, then according to the model, the magnetized casing joint can be detected at least up to about 30 m. In Fig. 2 it can be seen that at z = 530 m and at z = 470 m, i.e. about 30 m away "from the centre C of the magnetized joint (d = 500 m), there is still a clear influence on the $B_{tot}$ and $B_z$ values.

Under favourable conditions magnetic poles can be detected at distances over 30 m, although then only qualitative information can be derived about distance and direction.

The field test revealed that by magnetizing a casing section by moving it through the central opening of an electric coil a high magnetic pole strength of about 13000 $\mu$Wb can be obtained. The high degree of magnetization obtained by the method according to the invention is caused by the fact that within the central opening of an electric coil a very strong magnetic field can be created and that in a direction co-axial to the central axis of the opening the orientation of the magnetic flux remains identical. In this manner it is possible to magnetize a well casing section to a pole strength of about 13000 $\mu$Wb, which is close to the saturation field strength of steel. The same coil can be used to demagnetize sections located adjacent to the magnetized casing section by moving these sections in axial direction through the coil while passing an alternating current through the coil. By arranging a series of magnetized and demagnetized casing sections in a known pattern in a well it is possible to mark the casing magnetically in a known code.

The field test further revealed that the applicability of a theoretical model to describe the behaviour of a magnetic field around an idealized magnetic dipole allows the location of the magnetized casing section, in terms of distance and direction from the reference well, to be accurately determined. In order to avoid complications in the description of the theoretical magnetic field and to avoid weakening of the measured magnetic field by interference with magnetic fields emanated by other magnetic sources it is preferred to create only one magnetic dipole or a plurality of widely spaced dipoles rather than a plurality of closely spaced dipoles along the length in the casing string.

Said one magnetic dipole may be created by magnetizing one casing section only or by magnetizing a plurality of casing sections and interconnecting them such that a string of magnetized sections is created through which a magnetic flux is oriented in one direction only.

If the casing section is magnetized by moving the section through the coil the coil may be held stationary to the earth while the casing section is moved through the central opening of the coil. The coil may be mounted on top of a wellhead while the casing section is moved in a vertical direction through the coil. If the section is moved downwardly through the coil during the magnetization process it is preferred to raise it subsequently from the well in order to measure the pole strength of the magnetic field around the magnetized section before lowering the entire casing string into the well and cementing it in place.

It will be understood that instead of using an electric coil for magnetizing the well tubulars other magnetic sources may be used as well, provided that these sources create during the magnetization process a magnetic field of which the flux lines pass in a substantially longitudinal direction through the casing wall. Suitable alternative magnetic sources are e.g. a large Helmholtz coil arrangement, or the arrangement of strong magnets of opposite polarity at opposite ends of the section.

It will further be understood that instead of magnetizing a well casing or drill string any other assembly of well tubulars, such as production liners or a production string, may be magnetized as well. If the string of well tubulars is made of a non-magnetizable material, such as plastic, then an elongate section made of ferromagnetic material, such as a steel strip or sleeve may be magnetized by the method according to the invention and attached to a selected portion of the string.

## Claims

1. A method of magnetizing a string of well tubulars along at least part of the length thereof, the method comprising the steps of:
   - selecting an elongate ferromagnetic section of the string which is suitable to be magnetized,
   - creating a magnetic field having flux lines which pass in a substantially longitudinal direction through said section, thereby magnetizing said section such that it has opposed magnetic poles having a pole strength of more than 3000 $\mu$Wb,
   - mating said magnetized section with other sections of the string, and
   - lowering the string into a borehole.

2. The method of claim 1, wherein said magnetic field is created by passing a direct current through an electric coil, said coil having a central opening in which the magnetic flux lines have a substantially parallel orientation, and wherein the step of magnetizing said elongate ferromagnetic section is carried out by traversing the section in longitudinal direction through the central opening of the coil.

3. The method of claim 1, further comprising the step of measuring the magnetic pole strength of the magnetic field around the magnetized section prior to lowering the string into a borehole.

4. The method of claim 1, wherein said section is magnetized to a pole strength of more than 10000 $\mu$Wb.

5. The method of claim 2, wherein during the step of traversing the section through the opening of said coil said section is moved relative to the earth while said coil is held immobile relative to the earth.

6. The method of claim 5, wherein the coil is co-axially arranged relative to the central axis of the borehole at a location near the top thereof and the ferromagnetic section is moved in vertical direction through the coil while passing said direct current through the coil.

7. The method of claim 2, wherein during the step of traversing the section through the opening of said coil said section is held immobile relative to the earth while said coil is moved relative to the earth.

8. The method of claim 2, wherein at least one other section of the string which is mounted adjacent to said magnetized section of the string is demagnetized prior to lowering the string to the borehole by traversing said other section through said coil while passing an alternating current through the coil.

9. The method of claim 1, wherein said magnetized section is a section of a casing string.

10. The method of claim 1, wherein said magnetized section is a section of a drill pipe string.

11. A method of detecting the location of a borehole from an underground location remote from the borehole by measuring the magnetic field surrounding well tubulars within said well, which tubulars have been magnetized by the method according to claim 1.

**Revendications**

1. Procédé de magnétisation d'une rame de tubes de puits sur au moins une partie de sa longueur, le procédé comprenant les étapes consistant à:
   - choisir une section ferromagnétique allongée de la rame qui est apte à être magnétisée,
   - créer un champ magnétique dont les lignes de flux passent dans une direction sensiblement longitudinale à travers ladite section, en magnétisant ainsi ladite section dc façon qu'elle présente des pôles magnétiques opposés dont l'intensité polaire est supérieure à 3000 $\mu$Wb,
   - assembler ladite section magnétique avec d'autres sections de la rame, et
   - descendre la rame dans le trou de forage.

2. Le procédé selon la revendication 1, dans lequel ledit champ magnétique est créé par passage d'un courant continu à travers une bobine électrique, ladite bobine comprenant une ouverture centrale dans laquelle les lignes de flux magnétique sont orientées de façon sensiblement parallèle et dans lequel l'étape de magnétisation de ladite section ferromagnétique allongée est effectuée en amenant la section à traverser, dans sa direction longitudinale, l'ouverture centrale de la bobine.

3. Le procédé selon la revendication 1, comprenant on outre l'étape consistant à mesurer l'intensité polaire magnétique du champ magnétique autour de la section magnétisée avant d'abaisser la rame dans un trou de forage.

4. Le procédé selon la revendication 1, dans lequel ladite section est magnétisée à une intensité polaire supérieure à 10 000 $\mu$Wb.

5. Le procédé selon la revendication 2, dans lequel, au cours de l'étape où la section traverse l'ouverture de ladite bobine, ladite section est déplacée par rapport à la terre tandis que ladite bobine est maintenue immobile par rapport à la terre.

6. Le procédé selon la revendication 5, dans lequel la disposition de la bobine est coaxiale avec l'axe du trou de forage à un emplacement voisin du sommet de celui-ci et la section ferromagnétique est déplacée en direction verticale à travers la bobine pendant que ledit courant continu traverse la bobine.

7. Le procédé selon la revendication 2, dans lequel, au cours de l'étape où la section traverse l'ouverture de ladite bobine, ladite section est maintenue immobile par rapport à la terre tandis que ladite bobine est déplacée par rapport à la terre.

8. Le procédé selon la revendication 2, dans lequel au moins une autre section de la rame, qui est montée adjacente à ladite section magnétisée de la rame, est démagnétisée avant la descente de la rame dans le trou de forage en amenant ladite autre section à traverser ladite bobine pendant qu'un courant alternatif traverse la bobine.

9. Le procédé selon la revendication 1, dans lequel ladite section magnétisée est une section de rame de cuvelage.

10. Le procédé selon la revendication 1, dans lequel ladite section magnétisée est une section d'une rame de tube de forage.

11. Un procédé de détection de l'emplacement d'un trou de forage à partir d'un emplacement souterrain distant du trou de forage en mesurant le champ magnétique entourant les tubes du puits à l'intérieur dudit puits, lesdits tubes ayant été magnétisés par le procédé selon la revendication 1.

**Patentansprüche**

1. Verfahren zur Magnetisierung von Bohrlochrohren entlang zumindest eines Teils ihrer Länge mit den Schritten:

- Auswählen eines langgestreckten ferromagnetischen Abschnitts des Gestänges, der zum Magnetisieren geeignet ist,
- Erzeugen eines Magnetfelds mit Feldlinien, die im wesentlichen in Längsrichtung durch den Abschnitt gehen und ihn dabei so magnetisieren, daß er entgegengesetzte Magnetpole mit einer Polstärke von mehr als 3000 $\mu$Wb aufweist,
- Zusammenstecken des magnetisierten Abschnitts mit anderen Abschnitten des Gestänges, und
- Absenken des Gestänges in ein Bohrloch.

2. Verfahren nach Anspruch 1, bei dem das Magnetfeld durch Leiten von Gleichstrom durch eine elektrische Spule erzeugt wird und die Spule eine zentrale Öffnung aufweist, in der die magnetischen Feldlinien eine im wesentlichen parallele Ausrichtung haben, und wobei der Schritt des Magnetisierens des langgestreckten ferromagnetischen Abschnitts vorgenommen wird, indem der Abschnitt in Längsrichtung durch die zentrale Öffnung der Spule geführt wird.

3. Verfahren nach Anspruch 1, mit dem weiteren Schritt des Messens der magnetischen Polstärke des Magnetfelds um den magnetisierten Abschnitt herum vor dem Absenken des Gestänges in ein Bohrloch.

4. Verfahren nach Anspruch 1, bei dem der Abschnitt auf eine Polstärke von mehr als 10000 $\mu$Wb magnetisiert wird.

5. Verfahren nach Anspruch 2, bei dem während des Schritts des Führens des Abschnitts durch die Öffnung der Spule der Abschnitt relativ zum Untergrund bewegt wird, während die Spule relativ zum Untergrund unbewegt gehalten wird.

6. Verfahren nach Anspruch 5, bei dem die Spule koaxial in bezug auf die Mittelachse des Bohrlochs an einer Stelle nahe dessen oberem Ende angeordnet ist und der ferromagnetische Abschnitt in vertikaler Richtung durch die Spule bewegt wird, während der Gleichstrom durch die Spule geleitet wird.

7. Verfahren nach Anspruch 2, bei dem während des Schritts des Führens des Abschnitts durch die Öffnung der Spule der Abschnitt relativ zum Untergrund unbewegt gehalten wird, während die Spule relativ zum Untergrund bewegt wird.

8. Verfahren nach Anspruch 2, bei dem zumindest ein anderer Abschnitt des Gestänges, der benachbart zum magnetisierten Abschnitt des Gestänges befestigt ist, vor dem Absenken des Gestänges in das Bohrloch entmagnetisiert wird, indem der andere Abschnitt durch die Spule geführt wird, während ein Wechselstrom durch die Spule geleitet wird.

9. Verfahren nach Anspruch 1, bei dem der magnetisierte Abschnitt ein Abschnitt eines Bohrlochfutters ist.

10. Verfahren nach Anspruch 1, bei dem der magnetisierte Abschnitt ein Abschnitt eines Bohrgestänges ist.

11. Verfahren zur Feststellung der Lage eines Bohrlochs von einer entfernt vom Bohrloch gelegenen unterirdischen Stelle durch Messen des Magnetfelds, welches Bohrlochrohre in dem Bohrloch umgibt, die nach dem Verfahren gemäß Anspruch 1 magnetisiert worden sind.

FIG.1

FIG.2